# EUROPÄISCHE PATENTANMELDUNG

(11) **EP 3 757 926 A1**
(43) Veröffentlichungstag der Anmeldung: **30.12.2020**
(21) Anmeldenummer: 20154729.6
(22) Anmeldetag: 30.01.2020
(51) Int. Cl.: G06Q 30/02, G07F 7/06, G07G 1/00, B62B 3/14

(54) **ANZEIGEVORRICHTUNG FÜR ROHRGRIFFE, SYSTEM UND VERFAHREN**

(30) Priorität: 24.06.2019 DE 102019116984; 20.12.2019 EP 19219119
(71) Anmelder: Kirik, Seyhan, 80939 München (DE)
(72) Erfinder: Kirik, Seyhan, 80939 München (DE); Kirik, Burhan, 80939 München, DE (DE)
(74) Vertreter: Klemm, Rolf

(57) **Zusammenfassung**

Es wird Anzeigevorrichtung (1) beschrieben zur Befestigung an einem Griffrohr (3) mit einem Gehäusekörper (2) mit einer elektronischen Anzeigefläche (4), einer Steuerelektronik (5), einem Speicher (6), einem elektrischen Energiespeicher (7) einer Ladevorrichtung (8) und einem Funksendeempfängermodul (9).

## Beschreibung

### Hintergrund

Hier wird eine Anzeigevorrichtung für Rohrgriffe, System und Verfahren dafür beschrieben.

### Stand der Technik

Es ist bekannt an einem Einkaufswagen ein Gehäuse mit einer Werbefläche zu montieren. Hinter eine transparente Kunststoffscheibe ist ein Papierwerbung als Werbefläche geschoben.

### Zu lösendes Problem

Aufgabe ist es, eine Anzeigevorrichtung für Rohrgriffe, System und Verfahren dafür der eingangs bezeichneten Art bereitzustellen, die eine einfache und schnelle Handhabung ermöglichen.

### Lösung, Vorteile und Ausgestaltung

Hier wird eine Anzeigevorrichtung zur Befestigung an einem Griffrohr beschrieben mit einem Gehäusekörper, mit einer elektronischen Anzeigefläche, einer Steuerelektronik, einem Speicher, einem elektrischen Energiespeicher einer Ladevorrichtung und einem Funksendeempfängermodul. Vorteil dabei ist, dass der das Gehäuse nicht mehr manuell bedient werden muss, um die Anzeigevorrichtung mit neuen anzuzeigenden Informationen auszustatten. Aktuelle Informationen in Form von Bildern oder Text können über die elektronische Anzeigefläche dem Betrachter zeitnah übermittelt werden. Kurzbeschreibung der Zeichnungen

Mögliche Ausführungen werden nun anhand der beigefügten schematischen Darstellungen näher erläutert, von denen:
- Fig. 1: eine schematische Ansicht eines Systems mit einer Anzeigenvorrichtung,
- Fig. 2: eine schematische Ansicht eines Einkaufswagens,
- Fig. 3: eine schematische Ansicht einer Draufsicht einer Anzeigenvorrichtung und
- Fig. 4: eine schematische Ansicht einer Ausgabe des Rechners des Systems und
- Fig.5 bis 8: schematische Ansichten der Anzeigevorrichtung.

### Detaillierte Beschreibung der Zeichnung

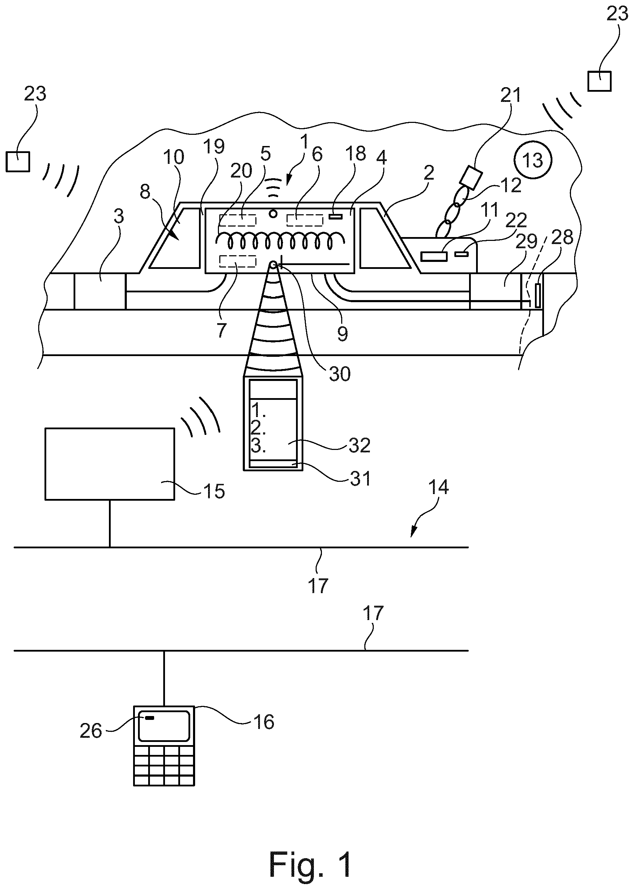

Die Fig. 1 zeigt eine schematische Ansicht eines Systems 14 mit einem Ausschnitt eines Einkaufswagens 13, der eine Anzeigevorrichtung 1 aufweist. Die Anzeigevorrichtung 1 ist zur Befestigung an einem Griffrohr 3 mit einem Gehäusekörper 2 mit einer elektronischen Anzeigefläche 4 ausgebildet und an dem Griffrohr 2 befestigt gezeigt. Die Anzeigevorrichtung 1 ist mit einer Steuerelektronik 5, einem Speicher 6, einem elektrischen Energiespeicher 7 einer Ladevorrichtung 8 und einem Funksendeempfängermodul 9 ausgebildet. Somit kann die Anzeigevorrichtung 1 mittels der Anzeigefläche 4 sehr schnell unterschiedliche Informationen, insbesondere Werbung zu Waren, darstellen.

Die notwendigen Daten werden über das Funksendeempfängermodul 9 übertragen. Der elektrische Energiespeicher 7 ist vorzugsweise ein wieder aufladbarer, aus dem Stand der Technik bekannter Lithium Akkumulator.

Um die Energieversorgung der Anzeigevorrichtung 1 nachhaltig zu verbessern, umfasst die Ladevorrichtung 8 mindestens ein Solarzellenmodul 10, das insbesondere ein- oder beidseitig zur elektronischen Anzeigefläche 4 angeordnet ist.

Bevorzugt ist die Anzeigevorrichtung 1 mit dem Gehäusekörper 2 mittig als Profilkörper zur Befestigung an einem Griffrohr eines Einkaufswagens 13 angeordnet, wobei die Ladevorrichtung 8 in einer Verriegelungskette 12 integriert ausgebildet ist, die zwischen den Einkaufswägen zur Diebstahlsicherung in Serie ausgebildet ist und mittels eines Münzpfandsystems 22 ver- und entriegelbar ist. Die Verriegelungskette 12 umfasst somit zwei elektrische Leitungen mit zwei Polkontaktschnittstellen jeweils an einer Steckbuchse 11 und am Stecker 21 selbst. Der Stecker 21 ist in der Steckbuchse 11 über ein bekanntes Münzpfandsystem 22 ver- und entriegelbar. In die Verriegelungskette 12 wird elektrische Energie mit einer Spannung bevorzugt zwischen ca. 3 und 5 V am Sammelplatz der Einkaufswägen 13 eingespeist, um die einzelnen Anzeigevorrichtungen 1 der Einkaufswägen 13 mit Ladeenergie zu versorgen.

Um möglichst mit einem geringen Arbeitsaufwand die Anzeigevorrichtung 1 mit Daten zu versorgen und dezentral anzusteuern, umfasst das Funksendeempfängermodul 9 mindestens eine standardisierte Funktechnologie bevorzugt in Hochfrequenztechnik, d. h. im GHz-Bereichen, d.h. insbesondere "wireless-LAN", d.h. nach IEEE 802.11x Standard und/oder bluetooth-Standards und die Anzeigefläche 3, 4, insbesondere organische LEDs, OLEDs, und der Speicher 6 Festkörper-Speicher-Chips, insbesondere eine Festplatte.

Gemäß einer alternativen Ausführungsform ist die Anzeigevorrichtung 1 mit dem Gehäusekörper 2 mittig als Profilkörper zur Befestigung an einem Griffrohr 3 einer Sessellift-Griffstange ausgebildet ist. Somit können Informationen für Gäste in einem Sessellift während der Fahrt mit dem Sessellift mittels der Anzeigevorrichtung 1 übermittelt werden.

Damit die Anzeigevorrichtung 1 auch im Winter einsatzbereit ist, ist ein elektrisch erzeugendes Wärmekissen 20 mit einem Temperatursensor 19 vorgesehen.

Weiterbevorzugt ist die Anzeigevorrichtung 1 mit einem Standortdetektionssystem in Wirkverbindung stehend ausgebildet. Das Standortdetektionssystem ist optisch, insbesondere als Infrarotsystem, weiterbevorzugt mittels Hochfrequenztechnik, insbesondere im GHz-Bereich ausgebildet. Dies hat mehrere Vorteile. Zum einen können Einkaufswägen 13 überwacht werden, dass diese nicht abhanden kommen und von dem Verbrauchermarkt weggebracht werden. Zum anderen kann das Standortdetektionssystem in dem Verbrauchermarkt in einer Verkaufsstraße mit Regalen und Waren darin wirken, in dem die entsprechende Ware korrespondierend zur tatsächlichen Ware im Regal auf der Anzeigefläche 4 angezeigt wird. Bevorzugt wird auf Angebotsware der Anzeigefläche 4 besonders hingewiesen. Hierzu kann der Einkaufswagen 13 mittels des Standortdetektionssystems sehr genau im Raum eines Verbrauchermarkts geortet und definiert werden.

Gemäß einer weiterbildenden Ausführungsform ist die Anzeigevorrichtung 1 mit mindestens einer Kamera mit einer Barcode-Scaneinrichtung in der Anzeigevorrichtung ausgebildet und insbesondere ist eine Zahlungseinrichtung ausgebildet. Somit können Waren sofort vom Einkäufer selbst gescannt werden und die Anzeigevorrichtung kann durch eine entsprechende integrierte Zahlungseinrichtung als Kasse zur bargeldlosen Bezahlung wirken. An der tatsächlichen bisher üblichen Kasse kann die endgültige Bezahlung über die Zahlungseinrichtung erfolgen und von einem Überwachungspersonal überprüft werden bzw. alternativ eine Barzahlung erfolgen. Der Einkäufer hat somit einen genaueren Überblick über den Wert seiner Einkäufe und kann gegebenenfalls mehr Informationen zum Kauf der Produkte selbstständig erfahren.

Die Fig. 1 zeigt das System 14 mit der Anzeigevorrichtung 1, die mit einer festen definierten elektronischen Adresse 18 zumindest über die elektrische Steuerelektronik 5 ausgebildet ist, wobei das System 14 mit einem Router 15 mit Funktechnologie und der Router 15 mit einem Rechner 16 über eine Internet-Datenverbindung 17 in Kommunikationsverbindung bringbar ist. Somit können mit einem dezentralen Rechner 16 Informationen und Daten, bei einem Einkaufswagen 13, beispielsweise Werbung, auf die Anzeigevorrichtung 1 aufgespielt und ausgetauscht werden. Eine unbegrenzte Zahl von Anzeigevorrichtungen 1 gleichzeitig mit den gleichen Daten und Informationen versorgt werden. Manuelles Austauschen von Werbepapier an einer mechanischen Anzeigevorrichtung mit einer Kunststoffscheibe, hinter der Werbepapier liegt, fällt somit weg.

Die Fig. 1 zeigt auch ein Verfahren zum Betreiben eines oben beschriebenen Systems 14 auf, wobei die Anzeigenvorrichtung 1 über eine Internet-Datenverbindung vom Rechner 16 mit einer festen definierten elektronischen Adresse 18 angesprochen wird und Bilddateien in den Speicher 6 übertragen werden, wobei die Bilddateien entweder manuell oder bevorzugt durch interne Empfängersensoren, die von äußeren Aktoren angesprochen werden, angesteuert werden. Die Empfängersensoren und die äußeren Aktoren aufgestellt in einem abgeschlossenen Gebäuderaum bilden ein Standortdetektionssystem 24 aus. Somit kann eine Anzeigenvorrichtung 1 multifunktional, insbesondere beim Einkauf von Waren, an einem Einkaufswagen über 13 betrieben werden.

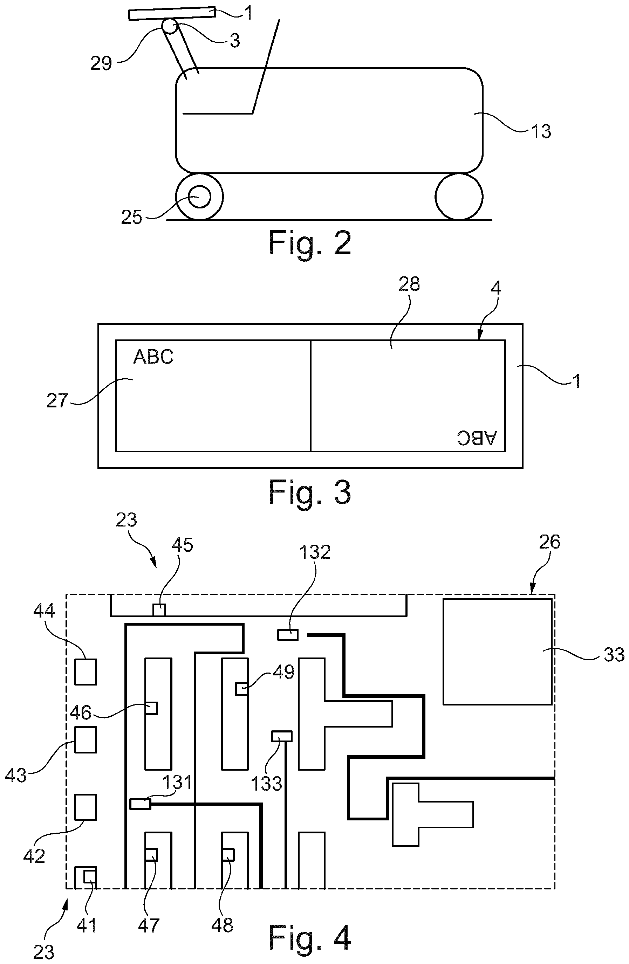

Gemäß der in Fig. 4 dargestellten Ausführungsform des Systems 14 umfasst das Standortdetektionssystem 24 ein Funktechnik-System, mit dem die Sendeleistung von ortsfest beliebig vielen platzierbaren Funk-Sendern 23 als äußeren Funk-Aktoren, insbesondere auf IEEE 802.x-Technologie basierend, messbar und die Funk-Sender 23 identifizierbar sind. Es versteht sich, dass das Funktechnik-System auch aus dem Stand der Technik bekannte Niedrig-Energie Netzwerk-Technologien, insbesondere ein Low Power Wide Area Network, umfassen kann.

Somit kann der Weg der Anzeigevorrichtung 1 innerhalb des Netzwerks, vorzugsweise in einem Supermarkt, aufgezeichnet werden und auf der Anzeigefläche 4 wegabhängige Inhalte dargestellt werden. Dies ist vor allem bei langen Wegen durch einen Supermarkt wichtig, um beispielsweise auf Angebote hinzuweisen oder falls eine vorher definierte elektronische Einkaufsliste 32 aus einem Kunden-Smartphone 31 im Speicher 6 hinterlegt wurde, entsprechend die Waren der Wegreihenfolge im Supermarkt beim Einkauf anzuzeigen und abzuarbeiten.

Am Einkaufswagen 13 ist weiterbevorzugt ein mechanischer Vibrator 29 an dem Griffrohr 3 ausgebildet. Somit kann der Supermarkt-Kunde von der Anzeigevorrichtung 1 in Verbindung mit dem Standortdetektionssystem 24 neben der visuellen Anzeigefläche 4 komplementär dazu auch haptisch durch mechanische Vibration auf Angebote bzw. auf Waren seiner Einkaufswarenliste 32 kurz aufmerksam gemacht werden, wenn er kurz vor diesen am Warenregal steht oder dieses Warenregal erreicht. Vorzugsweise durch einen Tastenklick, zum Abhaken, der Einkaufsliste, hört die Vibration auf oder durch gesteuerten Zeitablauf.

Die Funktechnologie für das Standortdetektionssystem 24 ist vorzugsweise aus Gründen der Effizienz eine standardisierte Nahfeld-Funktechnologie.

Die Anzeigevorrichtung 1 umfasst im Wesentlichen vorzugsweise aus sogenannten Smart-Tablet-PCs bekannte Technologien und technische Komponenten. Für kleinere Serien kann zumindest einen Teil der Anzeigevorrichtung 1 davon ein standardisierter Smart-Tablet-PC ausbilden.

Gemäß der Fig.1 umfasst die Anzeigevorrichtung 1 eine Scan-Vorrichtung 30, die einen Bildsensor mit Auswertevorrichtung umfasst, um insbesondere QR-Codes zu erkennen und auszuwerten. Die Daten des QR-Codes sind vorzugsweise einem bestimmten, insbesondere frei kombinierbaren, visuellen Inhalt zuordenbar, die im Speicher 6 der Anzeigenvorrichtung 1 abgelegt und abrufbar sind. Die Auswertevorrichtung der Scan-Vorrichtung 30 ist vorzugsweise in der Steuerelektronik 5 integrierbar, die ein Computerprogrammprodukt umfasst. Das Computerprogrammprodukt ist in einen Speicher 6 der Steuerelektronik 5 ladbar um das Scan- und Auswerteverfahren durchzuführen.

Vorzugsweise kann der Einkäufer auf seinem Smartcomputer, insbesondere einem Smartphone 31 die gewünschten Waren zu einer Wareneinkaufsliste 32 zu Hause zusammenstellen, die einen aufgrund der individuellen Wareneinkaufsliste 32 definierten QR-Code erzeugt. Dieser QR-Code ist von Scan-Vorrichtung 30 in Verbindung mit der Steuerelektronik 5 identifizierbar. Es versteht sich, dass zur Datenübertragung der Wareneinkaufsliste 32 von dem Smartphone 31 an die Anzeigevorrichtung 1 auch andere bekannte Technologie, insbesondere eine Funktechnologien, weiterbevorzugt Niedrig-Energie-Bluetooth also Kurz-Reichweiten Netzwerke, zur Anwendung einsetzbar sind.

Es wird Einkaufswagen 13 mit einer oben beschriebenen Anzeigenvorrichtung und einem oben beschriebenen System 14 in Fig.1 dargestellt, wobei die Anzeigenvorrichtung 1 mittig am Griffrohr 3 des Einkaufswagens 13 angeordnet, insbesondere anordenbar, ist.

Die Fig. 2 zeigt in einer Seitenansicht den Einkaufswagen 13, bei dem ein elektrischer Stromgenerator 25 in mindestens einem Rad als Ladevorrichtung 8 ausgebildet ist. Somit wird die elektrische Energie zum Laden des elektrischen Energiespeichers 7 und zum Betreiben der Anzeigevorrichtung 1 autark und bedarfsabhängig erzeugt. Wird die Anzeigevorrichtung 1 viel im Wareneinkauf benutzt so werden mit dem Einkaufswagen mehr Einkaufswege abgefahren, die zu einer höheren Energieerzeugung führen.

Alternativ ist gemäß einer nicht näher dargestellten Ausführungsform weiterbevorzugt eine Ladeinduktionsvorrichtung, insbesondere mit einer Feder zum Zusammenführen von zwei Induktionsladeflächen, als Ladevorrichtung 8 vorgesehen ist, wobei eine Induktionsladefläche am Einkaufswagen 13 und eine weitere ortsfest angeordnet ist. Die ortsfeste Induktionsladefläche kann bevorzugt im Boden in einer bestimmten Geometrie zu einer ebenfalls ortsfesten Führungsschiene der Räder des Einkaufswagens 13 angeordnet sein. Somit wird sichergestellt, dass die beiden Induktionsflächen im Wesentlichen deckungsgleich wiederholbar zusammenführbar sind. Die Feder kann unterstützend zum Zusammenführen der beiden Induktionsladeflächen wirken und in der festen Ortslage des Einkaufswagens 13 entspannt sein.

Gemäß der Fig. 3 ist die elektrische Anzeigefläche 4, visuell teilbar und eine Hälfte 28 der Anzeigefläche 4 in einer Ansichtsrichtung anzeigbar und die andere Hälfte 29 der Anzeigefläche ist in einer um 180° dazu gedrehten Ansichtsrichtung anzeigbar, wobei die visuellen Inhalte der beiden Hälften der Anzeigefläche voneinander getrennt sind. Somit kann bevorzugt die elektrische Anzeigefläche 4 zwei verschiedenen Personen mit unterschiedlichem Bildinhalt dienen, für den Einkäufer können Warenangebote oder die Einkaufswarenliste angezeigt werden, während um 180° gedreht visuelle Unterhaltung für Kinder angezeigt wird, wobei die Kinder in einen bekannten aufklappbaren Kindersitz mit Griff am Griffrohr 3 setzbar sind.

Die Fig. 4 zeigt auf ein Bild einer Anzeige 26 vom Rechner 16 als Ergebnis von einem Verfahren zum Betreiben des Systems 14, wobei die Wege des Einkaufswagens 13 mit Unterstützung des Standortdetektionssystems und der Anzeigevorrichtung 1 aufgezeichnet werden, und von der Anzeigevorrichtung 1 auf den Rechner 16 gemäß Fig. 1 übertragen werden und ausgewertet werden. Die Anzeige 26 zeigt einen schematischen Grundriss der Gänge mit den Warenregalen in einem Supermarkt. Bevorzugt wird oben rechts in einem Anzeigenfeld 33 die Kundeneinkaufszeit eines einzelnen Supermarktkunden mit einem der Einkaufswagen 131, 132 und/oder 133 aufgrund der Daten aus der Anzeigenvorrichtung 1 dargestellt, wie viele der aktuellen Warenangebote gefunden wurden und insbesondere die Verweildauer durchschnittlich vor Warenangebot.

Die einzelnen Funk-Sender 23 sind in der Figur 4 mit den Bezugszeichen 41 - 49 einzeln identifiziert und ein Bestandteil des Standortdetektionssystems.

Somit ist die Verweildauer der einzelnen Kunden vor den Warenregalen und das Auffinden von definierten Waren auswertbar und in weiteren Schritten optimierbar.

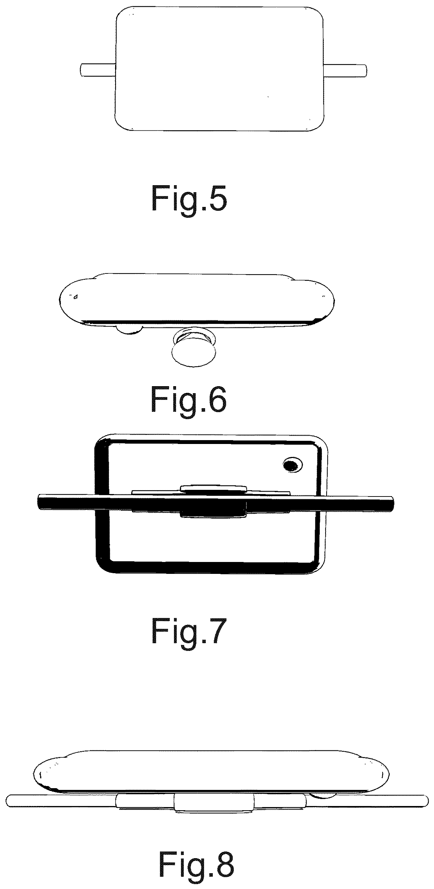

Die Fig. 5 zeigt eine Draufsicht, die Fig. 6 eine Stirnansicht über die Höhe, die Fig. 7 eine Rückansicht und die Fig. 8 eine Stirnansicht über die Länge der Anzeigenvorrichtung 1.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches / welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Lösung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst.

Die vorstehend erläuterten Vorrichtungs- und Verfahrensdetails sind zwar im Zusammenhang dargestellt; es sei jedoch darauf hingewiesen, dass sie auch unabhängig voneinander sind und auch frei miteinander kombinierbar sind. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

Auch die Ansprüche limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

## Patentansprüche

1. Anzeigevorrichtung (1) zur Befestigung an einem Griffrohr (3) mit einem Gehäusekörper (2) mit einer elektronischen Anzeigefläche (4), einer Steuerelektronik (5), einem Speicher (6), einem elektrischen Energiespeicher (7) einer Ladevorrichtung (8) und einem Funksendeempfängermodul (9).

2. Anzeigevorrichtung (1) nach Anspruch 1, wobei der Gehäusekörper (2) mittig als Profilkörper zur Befestigung an einem Griffrohr eines Einkaufswagens (13) angeordnet ist und wobei die Ladevorrichtung (8) in einer Verriegelungskette (12) integriert ausgebildet ist, die zwischen Einkaufswägen zur Diebstahlsicherung in Serie ausgebildet ist und mittels eines Münzsystems entriegelbar ist.

3. Anzeigevorrichtung (1) nach Anspruch 1oder 2, wobei ein elektrischer Stromgenerator (25) in mindestens einem Rad ausgebildet ist, wobei weiterbevorzugt eine Ladeinduktionsvorrichtung, insbesondere mit einer Feder zum Zusammenführen von zwei Induktionsladeflächen, vorgesehen ist, wobei eine Induktionsladefläche am Einkaufswagen (13) und eine weitere ortsfest angeordnet ist.

4. Anzeigevorrichtung (1) nach Anspruch 1 bis 3, wobei die Ladevorrichtung (8) mindestens ein Solarzellenmodul (10) umfasst, das insbesondere einoder beidseitig zur elektronischen Anzeigefläche angeordnet ist.

5. Anzeigevorrichtung (1) nach Anspruch 1 bis 4, wobei das Funksendeempfängermodul (9) eine standardisierte Funktechnologie, insbesondere "wireless-LAN", die Anzeigefläche (3, 4), insbesondere organische LEDs, OLEDs, und der Speicher (6) Speicher-Chips, insbesondere eine Festplatte, umfasst.

6. Anzeigevorrichtung (1) nach Anspruch 1, 4 oder 5, wobei der Gehäusekörper (2) mittig als Profilkörper zur Befestigung an einem Griffrohr (3) einer Sessellift-Griffstange ausgebildet ist.

7. Anzeigevorrichtung (1) nach einem der Ansprüche 1 bis 6, wobei ein elektrisch erzeugendes Wärmekissen (20) mit einem Temperatursensor (19) vorgesehen ist.

8. Anzeigevorrichtung (1) nach einem der Ansprüche 1 bis 7, wobei ein Standortdetektionssystem mit der Anzeigevorrichtung zusammen in Wirkverbindung stehend ausgebildet ist, wobei insbesondere das Standortdetektionssystem optisch, insbesondere als Infrarotsystem, weiterbevorzugt mittels Hochfrequenztechnik, insbesondere im GHz-Bereich, ausgebildet istwobei das Standortdetektionssystem ein Funktechnik-System umfasst, mit dem die Sendeleistung von ortsfest platzierbaren Funk-Sendern (23, 41-49), insbesondere auf IEEE 802.x-Technologie basierend, messbar und die Funk-Sender (23, 41-49), identifizierbar sind.

9. Anzeigevorrichtung (1) nach einem der Ansprüche 1 bis 8, wobei mindestens eine Kamera (30) mit einer Barcode-Scaneinrichtung in der Anzeigevorrichtung ausgebildet ist und insbesondere eine Zahlungseinrichtung ausgebildet ist.

10. System (14) mit einer Anzeigevorrichtung (1) nach einem der Ansprüche 1 bis 9, die mit einer festen definierten elektronischen Adresse (18) zumindest über die elektrische Steuerelektronik (5) ausgebildet ist, wobei das System (14) mit einem Router (15) mit Funktechnologie und der Router (15) mit einem Rechner (16) über eine Internet-Datenverbindung (17) in Kommunikationsverbindung bringbar ist.

11. Verfahren zum Betreiben eines Systems (14) nach Anspruch 10 mit einer Anzeigenvorrichtung (1) nach einem der Ansprüche 1 bis 9, wobei die Anzeigenvorrichtung (1) über eine Internet-Datenverbindung vom Rechner (16) mit einer festen definierten elektronischen Adresse (18) angesprochen wird und Bilddateien in den Speicher (6) übertragen werden, wobei die Bilddateien entweder manuell oder bevorzugt durch interne Empfängersensoren, die von äußeren Sensoren angesprochen werden, angesteuert werden, , wobei die Wege des Einkaufswagens (13) mit Unterstützung des Standortdetektionssystems und der Anzeigevorrichtung 1 aufgezeichnet werden, und von der Anzeigevorrichtung 1 auf den Rechner 16 übertragen werden und ausgewertet werden.

12. Einkaufswagen mit einer Anzeigenvorrichtung nach einem der Ansprüche 1 bis 10 und einem System nach Anspruch 9, wobei die Anzeigenvorrichtung (1) mittig am Griffrohr (3) des Einkaufswagens (13) angeordnet, insbesondere anordenbar, ist.

13. Einkaufswagen (13) nach dem vorherigen Anspruch, wobei die elektrische Anzeigefläche, visuell teilbar ist und eine Hälfte der Anzeigefläche in einer Ansichtsrichtung anzeigbar ist und die andere Hälfte der Anzeigefläche in einer um 180° dazu gedrehten Ansichtsrichtung anzeigbar ist, wobei die visuellen Inhalte der beiden Hälften der Anzeigefläche voneinander getrennt sind.

14. Einkaufswagen (13) nach dem vorherigen Anspruch 12 oder 13 wobei mindestens ein mechanischer Vibrator (29) an einem Griffrohr (3) ausgebildet ist,

15. Einkaufswagen (13) nach einem der vorherigen Ansprüche 12 bis 14, wobei Anzeigevorrichtung (1) eine Scan-Vorrichtung (30), die einen Bildsensor mit Auswertevorrichtung umfasst, um insbesondere QR-Codes zu erkennen und auszuwerten, wobei die Daten des QR-Codes vorzugsweise einem bestimmten, insbesondere frei kombinierbaren, visuellen Inhalt zuordenbar sind, die im Speicher (6) der Anzeigenvorrichtung (1) abgelegt und abrufbar sind.
